# EUROPEAN PATENT SPECIFICATION

(11) **EP 0 729 426 B1**
(45) Date of publication and mention of the grant of the patent: **09.04.2003**
(21) Application number: 95905298.6
(22) Date of filing: 28.11.1994
(51) Int. Cl.: B65B 1/30, B67C 3/02, B67D 5/33

(54) **FUELING SYSTEM**
BRENNSTOFFZUFUHRSYSTEM
SYSTEME D'ALIMENTATION EN CARBURANT

(30) Priority: 28.11.1993 IL 10778493
(43) Date of publication of application: 04.09.1996
(73) Proprietor: DELEK THE ISRAEL FUEL CORPORATION LTD., 68012 Tel Aviv (IL); SONOL ISRAEL LTD., 33263 Haifa (IL); DELEK (OVERSEAS) INC., Dover, Delaware 19903 (US); SONAPCO BANK STREET CORPORATION, New York, N.Y. 10117-0615 (US)
(72) Inventor: KELERICH, David, 47213 Ramat Hasharon (IL); TALMOR, Dov, 46427 Herzliya (IL)
(74) Representative: Hillier, Peter
(86) International application number: US9413611
(87) International publication number: WO95014612

(56) References cited:
- EP-A- 0 476 858
- US-A- 4 109 686
- US-A- 4 934 419
- US-A- 5 156 198
- US-A- 5 202 783

## Description

The present invention relates to fuel management systems for use with motor vehicles generally.

### BACKGROUND OF THE INVENTION

Fuel management systems which monitor fuel usage by vehicles and record the identity and other particulars of vehicles being fueled are known. The Fuelomat (R) automated fuel management system is commercially available from Del Pak Systems Ltd. A subsidiary of Orpak Industries (1983) of Israel, the present applicant/assignee. Patents showing fuel management systems include the following U.S. Patents: 5,156,198; 4,846,233; 4,469,149; 4,263,945; 4,109,686; 3,642,036; and EP-A-047 6 858, which discloses a system with i.a. a first communication module (1000) with separate power transmitting loop (1006) and signal receiving loop (1012) (see also figure 12), as well as a second communication module (900) with separate power receiving loop (904) and signal transmitting loop (916) (see also figure 11).

US-A-5,156,198 discloses a vehicle mounted fueling system identification unit including an inductive communication loop surrounding an intake pathway of the vehicle and circuitry inductively powered by the loop for transmitting various information via the loop such as vehicle information, credit information and fuel particulars.

EP-A-0476858 discloses apparatus for communication of information from a passive identification module associated with a fluid container and an active communication module associated with a fuel delivery device. The passive identification module receives its power from an RF signal generated by the active communication module.

### SUMMARY OF THE INVENTION

The present invention seeks to provide a system for use in fuel management systems of the type described hereinabove.

There is thus provided a system according to claim 1 and a system according to claim 2.

Preferably, the second inductive communication loop is fixed to the fuel intake pipe and is generally not exposed to view.

In accordance with a preferred embodiment of the present invention, the circuitry is mounted on the interior of the fuel inlet pipe.

Preferably, one or both of the inductive communication loops and the circuitry are mounted in an expandable housing which is securely mountable interior of the fuel inlet pipe. Fuel inlet pipes do not have a standard diameter and the expandable housing allows mounting in a variety of diameters.

In accordance with a preferred embodiment of the present invention, the expandable housing is formed with a rachet-type securing assembly.

Alternatively, the expandable housing is formed with compression actuated expansion joints.

### BRIEF DESCRIPTION OF THE DRAWINGS

The present invention will be understood and appreciated more fully from the following detailed description, taken in conjunction with the drawings in which:
Fig. 1 is a pictorial illustration of part of a fueling system constructed and operative in accordance with a preferred embodiment of the present invention;
Fig. 2A is a simplified illustration of the mounting of an inductive communication loop and associated circuitry on a fuel delivery nozzle in accordance with prior art;
Fig. 2B is a simplified illustration of the mounting of another inductive communication loop and associated circuitry on a fuel delivery nozzle in accordance with prior art;
Fig. 2C is a simplified illustration of the mounting of an inductive communication loop and associated circuitry on the fuel intake pipe of a vehicle in accordance with prior art; and
Figs. 3A and 3B are simplified block diagram illustrations of apparatus resident respectively in a filling station and a vehicle forming part of a fueling system constructed and operative in accordance with a preferred embodiment of the present invention.
Fig. 4 is a pictorial illustration of a passive transceiver mountable inside a fuel inlet pipe in accordance with a preferred embodiment of the present invention and an installation tool thereof;
Fig. 5 is a plan view of a transceiver of the type shown in Fig. 4 located inside a fuel inlet pipe of a vehicle;
Figs. 6A and 6B are detailed partial illustrations of two stages in the installation of the transceiver of Figs. 4 and 5 within a fuel inlet pipe, as viewed in the direction of the arrow VI, in accordance with a preferred embodiment of the present invention;
Figs. 7A and 7B are sectional illustrations, taken along the lines 7A - 7A and 7B - 7B in Figs. 6A and 6B, respectively;
Figs. 8A and 8B are plan views of two stages in the installation of the transceiver of Figs. 4 and 5 within a fuel inlet pipe in accordance with a preferred embodiment of the present invention;
Figs. 9A and 9B are sectional illustrations showing part of the internal construction of the transceiver of Fig. 4, respectively taken along the lines 9A - 9A in Fig. 4 and the lines 9B - 9B in Fig. 9A; and
Figs. 10A and 10B are pictorial illustrations of two stages in the installation of an alternative embodiment of transceiver in a fuel inlet pipe.

### DETAILED DESCRIPTION OF A PREFERRED EMBODIMENT

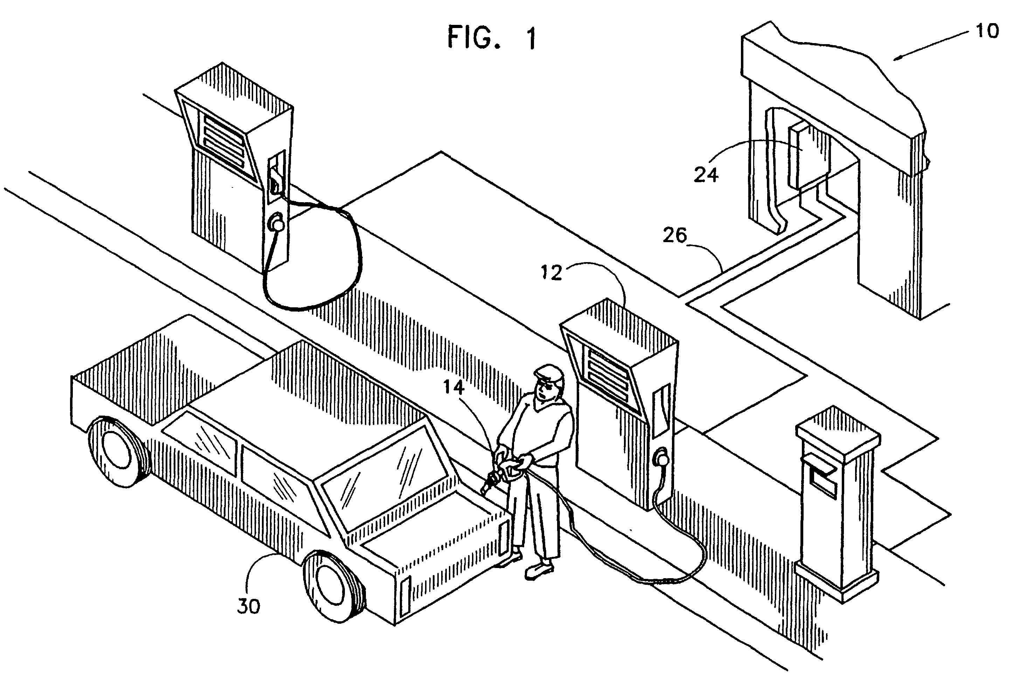

Reference is now made to Fig. 1, which illustrates a fueling system constructed and operative in accordance with a preferred embodiment of the present invention. The fueling system comprises at least one and preferably a plurality of fuel dispensing stations 10, each including at least one fuel pump 12 and associated delivery nozzle 14.

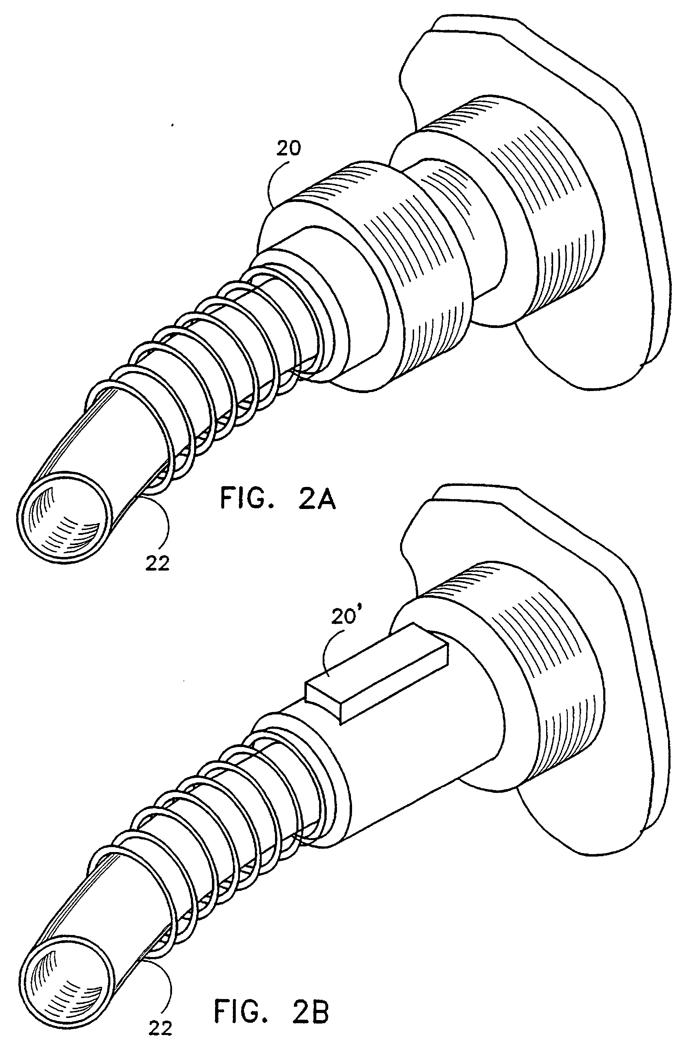

Referring now additionally to Figs. 2A, 2B and 2C, as known in applicant/assignee's existing prior art Fuelomat (R) automated fuel management system, there is provided an inductive communication loop 20 associated with each delivery nozzle 22, and a data receiver 24 (Fig. 1) connected thereto by wiring 26 or wireless links for receiving data via the inductive communication loop 20. Fig. 2B shows an alternative embodiment of an inductive communication loop 20'.

A multiplicity of vehicles 30, each including a fuel tank with fuel intake pipe 42 mounted thereon and a vehicle fueling identification unit including an inductive communication loop 41 arranged to surround the fuel intake pipe and to transmit identification information concerning the vehicle to the data receiver 24 via the two inductive communication loops 40 and 20 or 40 and 20'.

The prior art Fuelomat (R) fueling system required that the inductive communication loop 41 mounted on the inlet pipe 42 be powered by the vehicle battery and coupled to the vehicle odometer and possibly other vehicle instruments. This resulted in a relatively expensive vehicle fueling identification unit and relatively expensive installation thereof.

The present invention replaces the vehicle powered unit of the prior art with a self-contained passive vehicle mounted fueling system identification unit 40 including an inductive communication loop 41 arranged to surround a fuel intake pipe 42 of a vehicle and circuitry powered by electric power inductively received by the loop for transmitting via the loop at least one of the following parameters: vehicle identification number, credit information, required fuel particulars.

Typical mounting of the self-contained passive vehicle mounted fueling system identification unit 40 onto the fuel intake pipe 42 of a vehicle is shown in Fig. 2C. Preferably unit 41 is normally covered and out of sight during vehicle fueling and is retained with respect to the fuel intake pipe 42 against unacceptable vibrations, displacements and impacts.

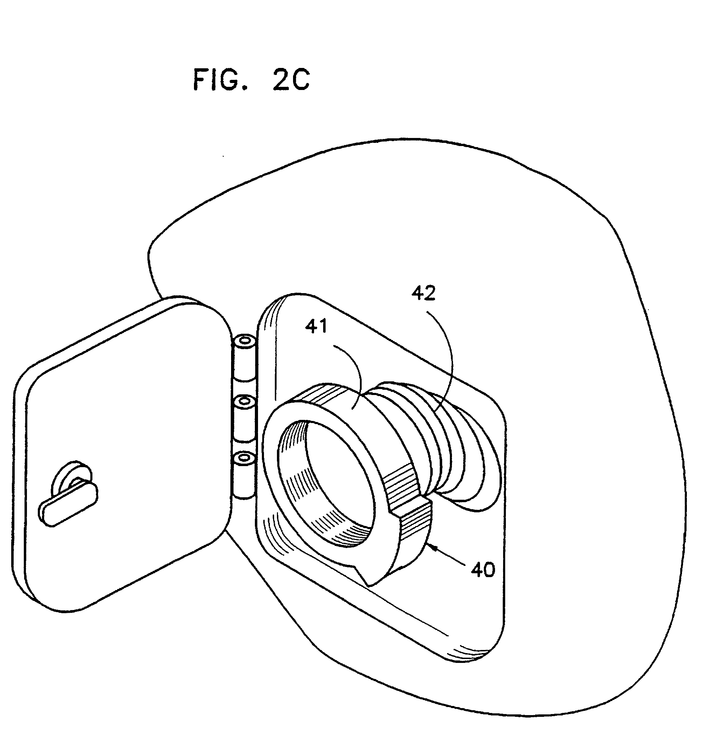

Reference is now made to Fig. 3A, which illustrates, in simplified block diagram form, fueling station mounted apparatus forming part of the fueling system of the present invention. The apparatus of Fig. 3A includes an inductive loop, such as loop 20, typically formed of a plurality of windings of an insulated conductor. As in the prior art, loop 20 is coupled via a conventional interface 21, to a data receiver 24 for reception of vehicle identification data from vehicles being fueled. Loop 20 may also be coupled to a data source (not shown) for data transmission to vehicles, if such functionality is desired.

In accordance with a preferred embodiment of the present invention, electrical power is transmitted from the fueling station mounted apparatus to the vehicle mounted apparatus, obviating the need for an electrical power connection of the vehicle mounted apparatus to the vehicle battery and thus greatly simplifying and reducing the cost of the vehicle mounted apparatus.

In accordance with a preferred embodiment of the present invention, the electrical power is provided by an oscillator 50, which outputs AC electrical power, via any suitable interface 52, to loop 20, which is the same loop which is used for data communication. The presence of loop 20 in propinquity to vehicle mounted loop 41 during fueling inductively couples the two loops and is operative to transfer AC electrical power in a wireless and contactless manner from loop 20 to loop 41.

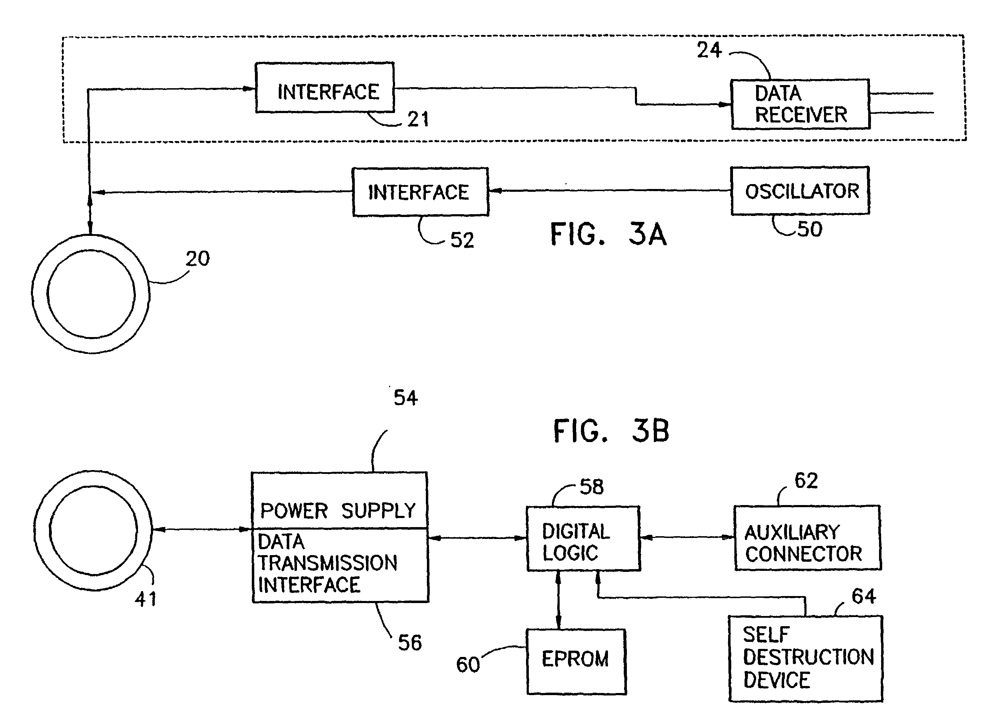

As illustrated in Fig. 3B, loop 41, which may be identical to loop 20, is coupled to a power supply 54, such as capacitor or battery, which stores electrical power received inductively from loop 20 and is also coupled via a data transmission interface 56 to digital logic circuitry 58. Digital logic circuitry 58 typically interfaces with a storage device such as an EPROM 60 and may also be associated with an auxiliary connector 62. A tamper-activated self destrust device 64, such as a microswitch controlled data source, may be provided so as to automatically and irreversibly deactivate the digital logic 58 in response to tampering.

The EPROM 60 typically stores various vehicle and fueling system identification parameters, such as vehicle identification number, credit information, required fuel particulars. Other parameters may be stored as well. These parameters are transmitted by digital logic circuitry 58 via loops 41 and 20 to data receiver 24 during fueling of a vehicle.

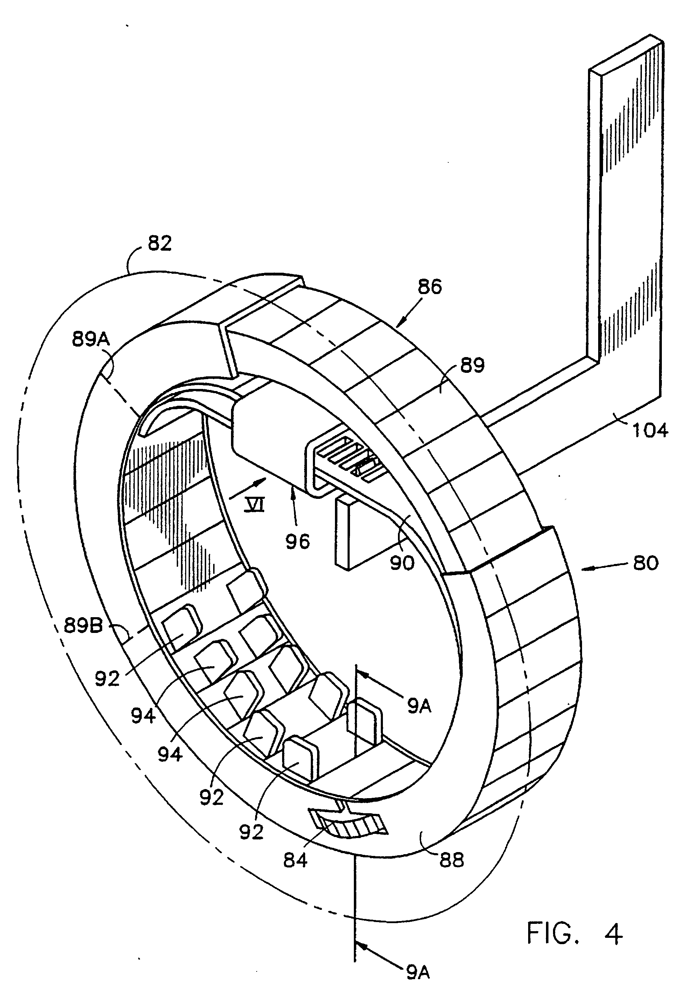

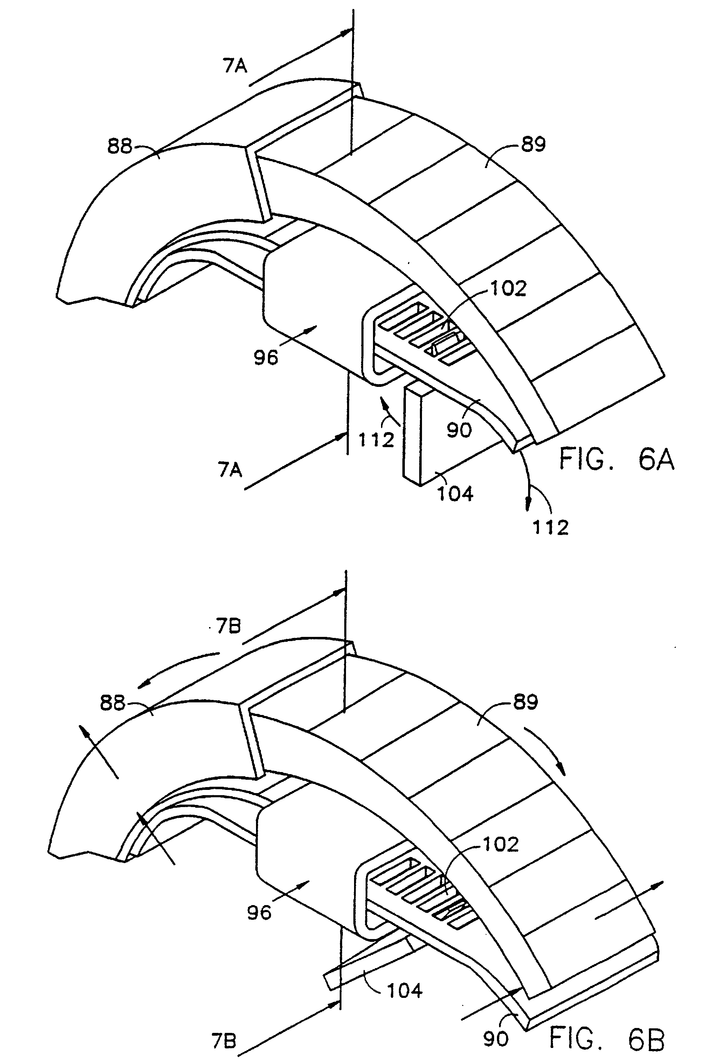

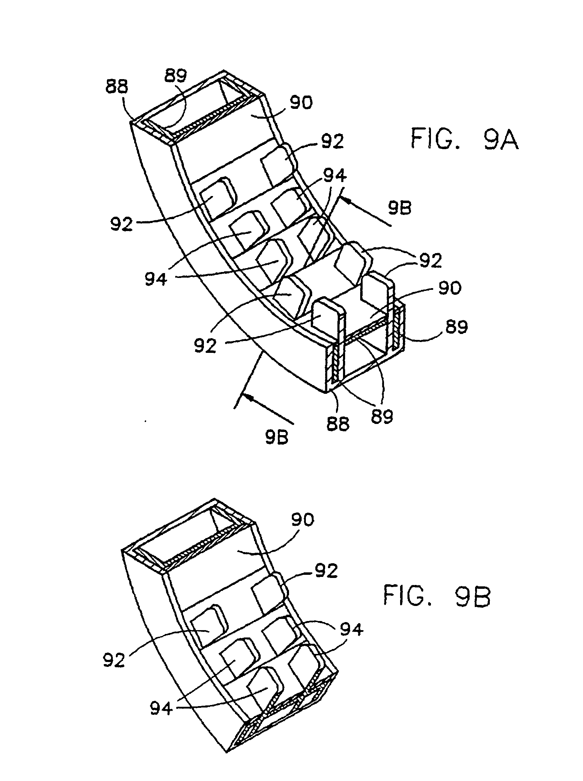

Reference is now made to Figs. 4 and 5, which illustrate another preferred embodiment of an identification unit assembly 80 which is arranged to be mounted inside a fuel inlet pipe 82. As seen particularly in Fig. 4, the identification unit, which typically comprises a transceiver 84 is disposed in a generally annular housing assembly 86 which includes a first portion 88 which subtends approximately 270 degrees of arc, a second portion 89 which also subtends approximately 270 degrees of arc and an extendible band 90. The two ends of the second portion 89 are shown as dashed hidden lines 89A and 89B. It is seen in Figs. 9A and 9B that the cross-sectional shape of the first portion 88 resembles the letter U, while the cross-sectional shape of the second portion 89 resembles an inverted U. The second portion 89 fits inside the first portion 88 and as is seen particularly in Fig. 4, the open end of the second portion 89, that is the open section between lines 89A and 89B, is not aligned with the open end of the first portion 88, but rather is inside the first portion 88.

The first portion 88 is provided with a first plurality of tabs 92 and the second portion 89 is provided with a second plurality of tabs 94. As is seen clearly in Figs. 9A and 9B, the first plurality of tabs 92 passes through the second portion 89 and the band 90, and the second plurality of tabs 94 passes through the band 90. Both pluralities of tabs are bent over in the final assembly to securely fasten the band 90 to the first 88 and second 89 portions.

As shown in Fig. 4, the transceiver 84 is mounted in a recess between the first 88 and second 89 portions. The transceiver 84 may be mounted by any method, such as with mechanical fasteners or by bonding.

The housing assembly 86 is expandable and thus can be adapted for mounting in fuel intake pipes with different diameters. In accordance with a preferred embodiment of the present invention, a ratchet type securing assembly 96 is operative to expand the band 90 outwardly causing the band 90 to press the second portion 89 outwardly against the first portion 88, which in turn presses against the interior of the fuel inlet pipe 82 and thus secures the housing assembly 86 in tight engagement with the interior of the fuel inlet pipe 82.

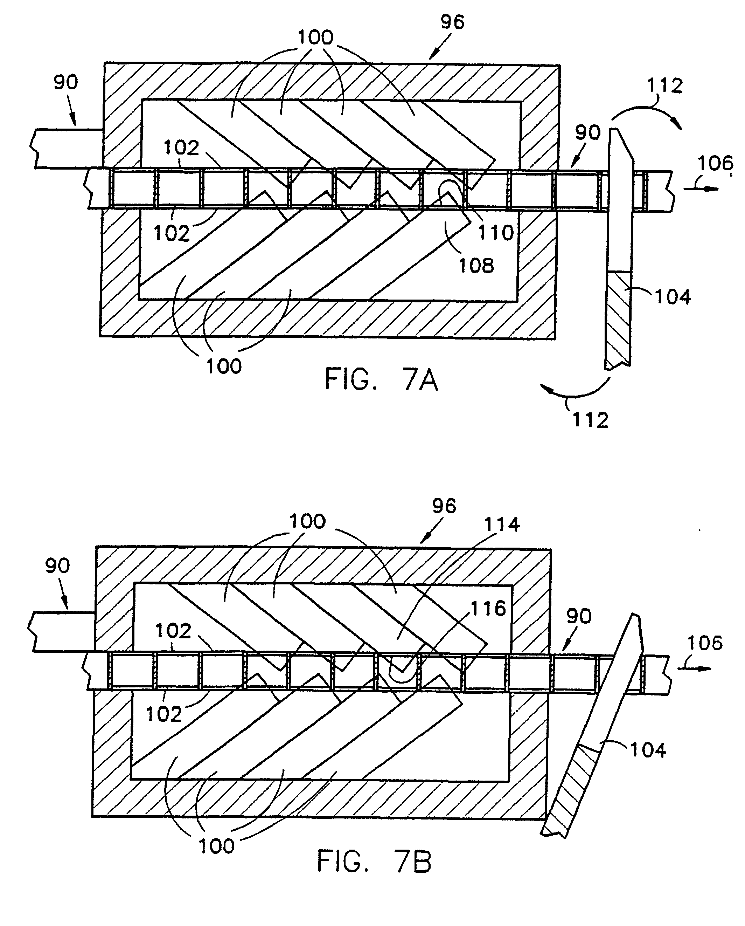

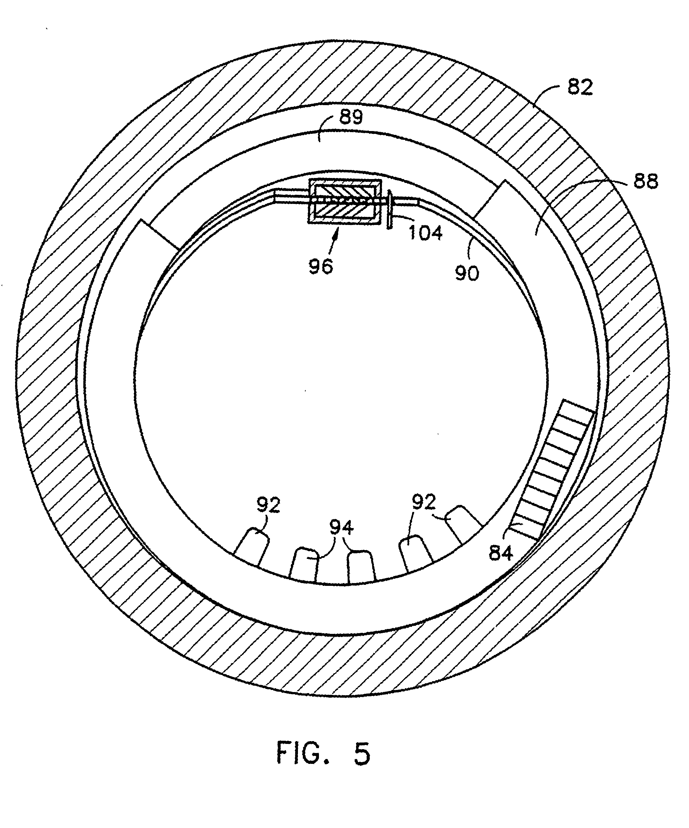

The securing assembly 96 comprises a plurality of engagement teeth 100, as shown clearly in Figs. 7A and 7B. The teeth 100 are adapted to engage with a plurality of notches 102 on the band 90. It is a particular feature of the present invention that only one tooth of the plurality of teeth 100 is engaged at one time with any one of the notches 102. A tool 104 engages one of the notches 102 and is operative to advance the band 90 notch by notch in the direction indicated by the arrow 106 in Figs. 7A and 7B.

In Fig. 7A, initially only a tooth indicated by reference numeral 108 is engaged in a notch indicated by reference numeral 110. All other teeth 100 are misaligned with their corresponding notches 102. As the tool 104 is turned in the direction indicated by arrows 112, the band 90 is advanced in the direction 106 and the tooth 108 becomes disengaged from notch 110 and a different tooth 114 becomes engaged in a notch 116 as is shown in Fig. 7B. This arrangement of teeth and notches allows for fine incremental expansion of the band 90 and operates on the principle of a Vernier scale in which only one tooth is aligned with a notch at a time. Additionally in a preferred embodiment of the present invention, the teeth 100 are divided into two parallel, slightly offset groups of upper and lower teeth as is shown in Figs. 7A and 7B. This arrangement conserves volume.

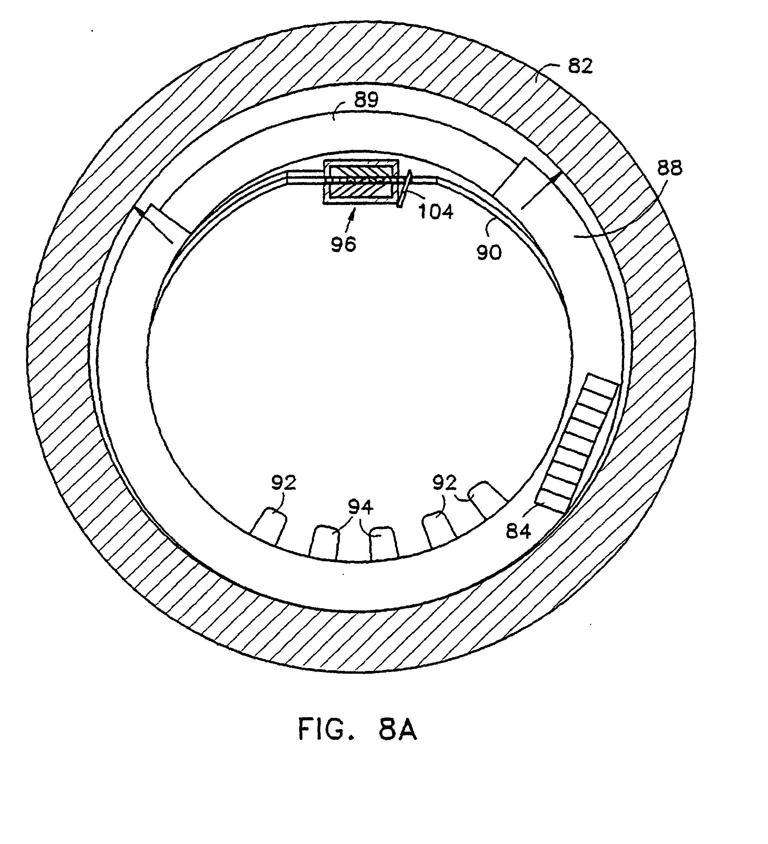

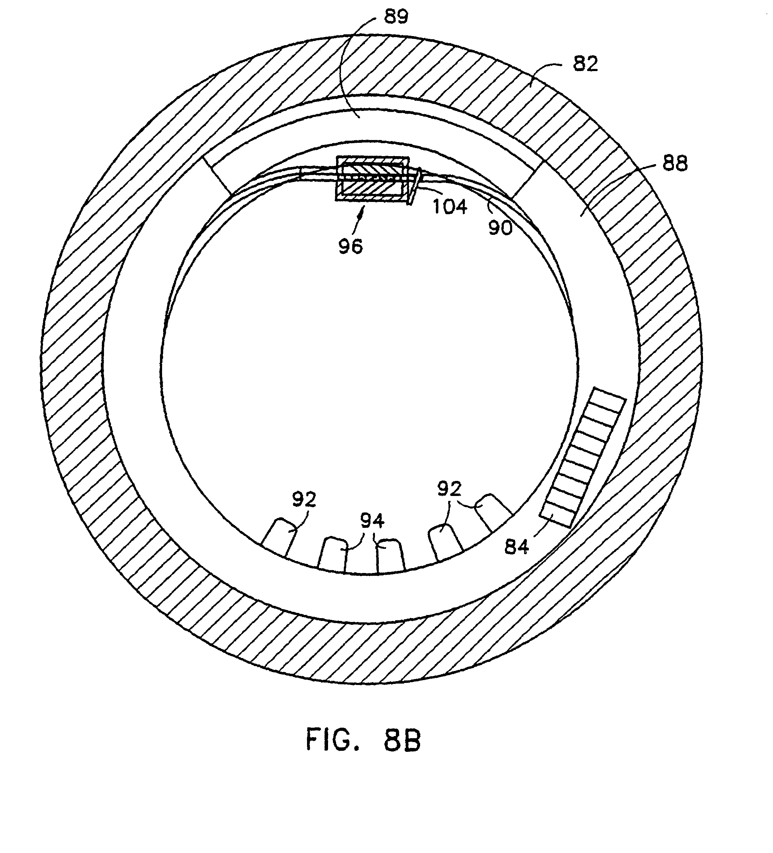

As seen in Figs. 6A, 6B, 8A and 8B, advancement of the band 90 by means of the tool 104 causes the band 90 to press against the second portion 89 which in turn presses against the first portion 88 which presses against the interior of the fuel pipe 82, thereby tightening the housing assembly 86 against the interior of the fuel inlet pipe 82. The band 90 presses against the second portion 89 which then presses against the first portion 88 because all three are attached to one another at the bottom by means of the tabs 92 and 94. The ends of the band 90 near the assembly 96 are free to expand outwardly and to press against the second portion 89.

Figs. 8A and 8B illustrate the sequential tightening of housing assembly 86 in inlet pipe 82.

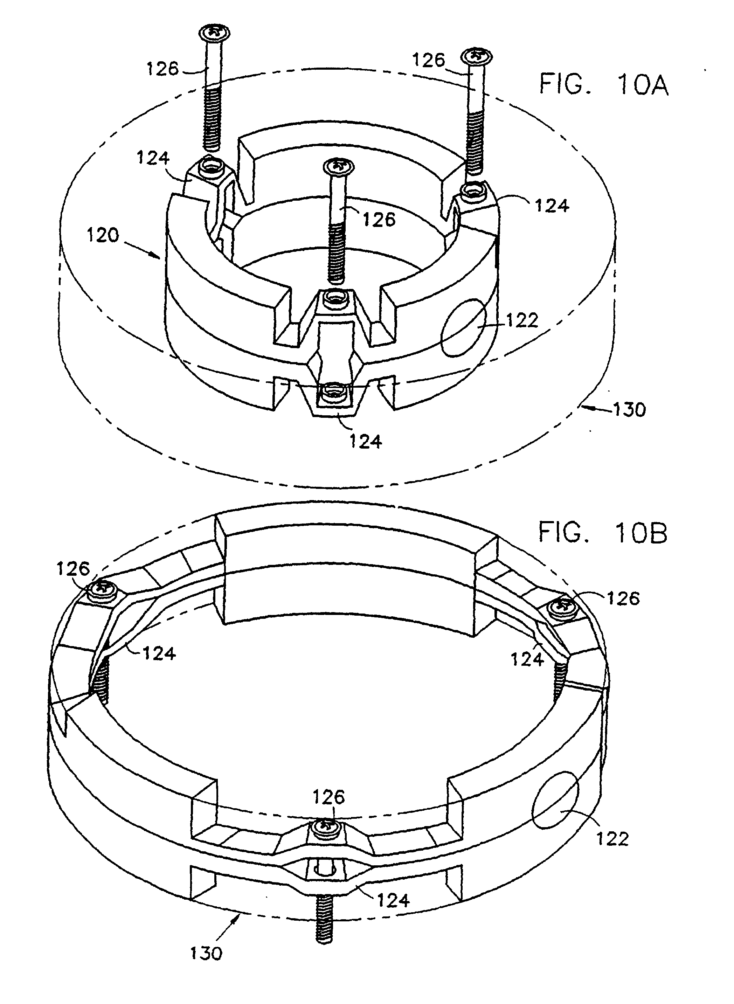

Reference is now made to Figs. 10A and 10B, which illustrate an alternative construction of a identification unit transceiver useful in the system of the present invention. Here a housing assembly 120 containing an identification unit 122 is formed with a plurality of compression activated expansion joints 124. A plurality of screws 126 operatively engage the expansion joints 124, which may have threading (not shown) for engagement with the screws.

As seen in Fig. 10B, tightening of screws 126 in engagement with expansion joints 124 produces expansion of the expansion joints and increases the overall outer radius of the housing assembly 120, causing it to tightly engage the interior of a fuel inlet pipe 130.

It will be appreciated by persons skilled in the art that the present invention is not limited by what has been particularly shown and described hereinabove. Rather the scope of the present invention is defined only by the claims which follow:

## Claims

1. A vehicle fueling system including:
at least one fuel dispensing station (10), each including at least one fuel pump (12) and associated delivery nozzle (14), a first inductive power transmission and communication loop (20) associated with the delivery nozzle, a transmitter for transmitting electrical energy via the first inductive communication loop and a data receiver (24) for receiving data via the first inductive communication loop, and
a multiplicity of vehicles (30), each including a chassis and a fuel tank with fuel intake pipe (42) mounted thereon and a fueling system identification unit which includes a second inductive communication loop (41) arranged to surround the fuel intake pathway and operative to transfer power and data, electrical power storage means (54) connected to the second inductive communication loop for storing electric power inductively received by the second inductive communication loop via the first inductive loop from the transmitter and digital circuitry (58) powered by the electric power storage means and arranged to transmit digital data via the second and first inductive communication loops to the data receiver, said digital data including vehicle identification number credit information and/or required fuel particulars.

2. A vehicle fueling system including:
at least one fuel dispensing station (10), each including at least one fuel pump (12) and associated delivery nozzle (14), a first inductive power transmission and communication loop (20) associated with the delivery nozzle, a transmitter for transmitting electrical energy via the first inductive communication loop and a data receiver (24) for receiving data via the first inductive communication loop, and
a multiplicity of vehicles (30), each including a chassis and a fuel tank with fuel intake pipe (42) mounted thereon and a fueling system identification unit mounted inside said fuel inlet pipe, said fueling identification unit including a second inductive communication loop (41) operative to transfer power and data, electrical power storage means (54) connected to the second inductive communication loop for storing electric power inductively received by the second inductive communication loop via the first inductive loop from the transmitter and digital circuitry (58) powered by the electric power storage means and arranged to transmit digital data via the second and first inductive communication loops to the data receiver, said digital data including vehicle identification number, credit information and/or required fuel particulars.

3. System according to either of claims 1 and 2 and wherein said circuitry is programmable.

4. System according to claim 1 and wherein the second inductive communication is loop fixed to the fuel intake pipe and is generally not exposed to view.

5. System according to any of the preceding claims and wherein the second inductive communication loop mounted on the vehicle is provided with a self-destruct device which destroys the intended functionality thereof automatically in response to unauthorized tampering therewith.

## Patentansprüche

1. Brennstoffzufuhrsystem für ein Fahrzeuges, das enthält:
mindestens eine Brennstoffverteilungsstation (10), von welcher eine jede mindestens eine Brennstoffpumpe (12) und einen damit verbundenen Ausflusshahn (14) mit einschließt, eine erste induktive Leistungsübertragung und Kommunikationsschleife (20), die mit dem Ausflusshahn zusammenhängt, einen Transmitter für die Übertragung von elektrischer Energie über die erste induktive Kommunikationsschleife und einen Datenempfänger (24) für den Empfang von Daten über die erste induktive Kommunikationsschleife, und
eine Vielzahl von Fahrzeugen (30), von denen ein jedes ein Fahrgestell und einen Brennstofftank mit einem daran befestigten Einlassrohr (42) für den Brennstoff aufweist und eine Identifikationseinheit für das Betankungssystem, das eine zweite induktive Kommunikationsschleife (41) enthält, die so angeordnet ist, dass sie den Aufhahmeweg des Brennstoffes umgibt und betriebsbereit ist, um Energie und Daten zu übertragen, eine elektrische Energiespeichervorrichtung (54), die mit der zweiten induktiven Kommunikationsschleife verbunden ist, für die Speicherung von elektrischer Energie, die induktiv von der zweiten induktiven Kommunikationsschleife über die erste induktive Schleife aufgenommen wird von dem Transmitter, und einen digitalen Schaltkreis (58), der von der elektrischen Energiespeichervorrichtung mit Strom versorgt wird und so angeordnet ist, dass er digitale Daten über die zweite und die erste induktive Kommunikationsschleife zu dem Datenempfänger überträgt, wobei die besagten digitalen Daten die Identifikationsnummer des Fahrzeuges, die Kreditinformation und/oder die erforderliche Einzelheiten des Brennstoffes enthalten.

2. Brennstoffzufuhrsystem für ein Fahrzeuges, das enthält:
mindestens eine Brennstoffverteilungsstation (10), von welcher jede mindestens eine Brennstoffpumpe (12) und einen damit verbundenen Ausflusshahn (14) mit einschließt, eine erste induktive Leistungsübertragung und Kommunikationsschleife (20), die mit dem Ausflusshahn zusammenhängt, einen Transmitter für die Übertragung von elektrischer Energie über die erste induktive Kommunikationsschleife und einen Datenempfänger (24) für den Empfang von Daten über die erste induktive Kommunikationsschleife, und
eine Vielzahl von Fahrzeugen (30), von denen ein jedes ein Fahrgestell und einen Brennstofftank mit einem daran befestigten Einlassrohr (42) für den Brennstoff aufweist und eine Identifikationseinheit für das Betankungssystem, die innerhalb des Brennstoffeinlassrohres angebracht ist, wobei die Einheit für die Betankungsidentifikation eine zweite induktive Kommunikationsschleife (41) enthält, die betriebsbereit ist, um Energie und Daten zu übertragen, eine elektrische Energiespeichervorrichtung (54), die mit der zweiten induktiven Kommunikationsschleife verbunden ist, für die Speicherung von elektrischer Energie, die induktiv von der zweiten induktiven Kommunikationsschleife über die erste induktive Schleife aufgenommen wird von dem Transmitter, und einen digitalen Schaltkreis (58), der von der elektrischen Energiespeichervorrichtung mit Strom versorgt wird und so angeordnet ist, dass er digitale Daten über die zweite und die erste induktive Kommunikationsschleife zu dem Datenempfänger überträgt, wobei die besagten digitalen Daten die Identifikationsnummer des Fahrzeuges, die Kreditinformation und/oder die erforderliche Einzelheiten des Brennstoffes enthalten.

3. System gemäss einem der beiden Ansprüche 1 und 2 und bei welchem der besagte Schaltkreis programmierbar ist.

4. System gemäss Anspruch 1 und bei welchem die zweite induktive Kommunikationsschleife an dem Einlassrohr für den Brennstoff angebracht ist und im Allgemeinen dem Blick verborgen bleibt.

5. System gemäss irgendeinem der vorhergehenden Ansprüche und bei welchem die zweite induktive Kommunikationsschleife, die auf dem Fahrzeug befestigt ist, mit einer selbst zerstörerischen Vorrichtung ausgestattet ist, welche die beabsichtigte Funktionalität derselben automatisch zerstört als Antwort auf einen unautorisierten unbefugten Eingriff hierin.

## Revendications

1. Système d'alimentation en carburant pour véhicule comprenant:
au moins une station de distribution de carburant (10), chacune comprenant au moins une pompe à carburant (12) et un pistolet de distribution associé (14), une première boucle de transmission d'énergie et de communication inductive (20) associée au pistolet de distribution, un émetteur destiné à émettre de l'énergie électrique par l'intermédiaire de la première boucle de communication inductive et un récepteur de données (24) destiné à recevoir des données par l'intermédiaire de la première boucle de communication inductive, et
une pluralité de véhicules (30), comprenant chacun un châssis et un réservoir à carburant sur lequel est monté un conduit d'admission de carburant (42) et une unité d'identification de système d'alimentation en carburant qui comprend une deuxième boucle de communication inductive (41) configurée pour entourer la voie d'admission de carburant et fonctionnant pour transférer de l'énergie et des données, un moyen de stockage d'énergie électrique (54) relié à la deuxième boucle de communication inductive pour stocker l'énergie électrique reçue de façon inductive par la deuxième boucle de communication inductive par l'intermédiaire de la première boucle inductive depuis l'émetteur et un ensemble de circuits numériques (58) alimenté en énergie par le moyen de stockage d'énergie électrique et configuré pour transmettre des données numériques par l'intermédiaire des deuxième et première boucles de communication inductives au récepteur de données, lesdites données numériques comprenant le numéro d'identification du véhicule, les informations de crédit et/ou les caractéristiques du carburant requis.

2. Système d'alimentation en carburant pour véhicule comprenant:
au moins une station de distribution de carburant (10), chacune comprenant au moins une pompe à carburant (12) et un pistolet de distribution associé (14), une première boucle de transmission d'énergie et de communication inductive (20) associée au pistolet de distribution, un émetteur destiné à émettre de l'énergie électrique par l'intermédiaire de la première boucle de communication inductive et un récepteur de données (24) destiné à recevoir des données par l'intermédiaire de la première boucle de communication inductive, et
une pluralité de véhicules (30), chacun comprenant un châssis et un réservoir à carburant sur lequel est monté un conduit d'admission de carburant (42) et une unité d'identification de système d'alimentation en carburant montée à l'intérieur dudit conduit d'admission de carburant, ladite unité d'identification d'alimentation en carburant comprenant une deuxième boucle de communication inductive (41) fonctionnant pour transférer de l'énergie et des données, un moyen de stockage d'énergie électrique (54) relié à la deuxième boucle de communication inductive pour stocker l'énergie électrique reçue de façon inductive par la deuxième boucle de communication inductive par l'intermédiaire de la première boucle inductive depuis l'émetteur et un ensemble de circuits numériques (58) alimenté en énergie par le moyen de stockage d'énergie électrique et configuré pour transmettre des données numériques par l'intermédiaire des deuxième et première boucles de communication inductives au récepteur de données, lesdites données numériques comprenant le numéro d'identification du véhicule, les informations de crédit et/ou les caractéristiques du carburant requis.

3. Système selon l'une ou l'autre des revendications 1 et 2 et dans lequel ledit ensemble de circuits est programmable.

4. Système selon la revendication 1 et dans lequel la deuxième boucle de communication inductive est fixée au conduit d'admission de carburant et n'est généralement pas exposée à la vue.

5. Système selon l'une quelconque des revendications précédentes et dans lequel la deuxième boucle de communication inductive montée sur le véhicule est munie d'un dispositif d'autodestruction qui détruit automatiquement sa fonctionnalité visée en réponse à son altération non autorisée.
